# EUROPÄISCHE PATENTSCHRIFT

(11) **EP 2 318 982 B1**
(45) Veröffentlichungstag und Bekanntmachung des Hinweises auf die Patenterteilung: **13.03.2013**
(21) Anmeldenummer: 09777991.2
(22) Anmeldetag: 20.08.2009
(51) Int. Cl.: G06K 19/077, G06K 7/00, G06M 1/27, G06M 1/00, G01F 1/00, G01F 15/00, G06M 3/00, G01D 5/00, G01B 7/00, G01R 11/16, G01C 22/00

(54) **VORRICHTUNG ZUR ABTASTUNG DER TEILSTRICHE EINES MECHANISCHEN ROLLENZÄHLWERKS BEI ZÄHLERN ALLER ART**
DEVICE FOR SCANNING THE DIVISION MARK OF A MECHANICAL ROLLER-TYPE COUNTER, FOR ANY TYPE OF COUNTER
DISPOSITIF DE LECTURE DES REPÈRES DE GRADUATION D'UN MÉCANISME DE COMPTEUR MÉCANIQUE À ROULEAUX, SUR LES COMPTEURS DE TOUS TYPES

(30) Priorität: 22.08.2008 DE 102008039377
(43) Veröffentlichungstag der Anmeldung: 11.05.2011
(73) Patentinhaber: Hengstler GmbH, 78554 Aldingen (DE)
(72) Erfinder: DEICHMEYER, Herbert, 25361 Krempe (DE); LIEBERMANN, Frieder, 78549 Spaichingen (DE); HOFFMANN, Norbert, 78554 Aldingen (DE); LUTTMER, Jörg, 8560 Märstetten (CH)
(74) Vertreter: Riebling, Peter
(86) Internationale Anmeldenummer: PCT/EP2009/006028
(87) Internationale Veröffentlichungsnummer: WO 2010/020412

(56) Entgegenhaltungen:
- DE-A1- 3 343 144
- DE-A1- 3 401 095
- US-A- 4 642 634
- US-A- 5 420 569

## Beschreibung

Die Erfindung betrifft eine Vorrichtung zur Abtastung der Teilstriche eines mechanischen Rollenzählwerkes bei Zählern aller Art nach dem Oberbegriff des Patentanspruches 1.

Ein derartiger Stand der Technik ist beispielsweise mit dem Gegenstand der DE 197 19 459 A1 bekannt geworden, bei der zur Auslesung der Teilstriche eines mechanischen Rollenzählwerkes ein lichtempfindlicher Matrix-Sensor verwendet wird, der insbesondere als CCD-Array ausgebildet ist und der als Vorsatz auf einen herkömmlichen Zähler aufgesetzt wird. Hierbei wird vorausgesetzt, dass ein lichtdurchlässiges Fenster von außen her zugänglich ist, um das CCD-Array von außen auf dieses Fenster aufsetzen zu können.

Durch entsprechende Belichtung der sich drehenden Zahlenrollen kann von dem aufgesetzten CCD-Feld ein entsprechendes Signal empfangen und verarbeitet werden. Nachteil dieser bekannten Auslesetechnik ist, dass sie außerordentlich schmutz- und feuchtigkeitsanfällig ist und im Übrigen nicht genau arbeitet. Es ist relativ schwierig, aufgrund einer Mustererkennung die in dem CCD anfallenden Signale in der Weise auszuwerten, dass man erkennen kann, welche Zahl auf welcher Zahlenrolle gerade vorbeigelaufen ist. Dies hat den weiteren Nachteil, dass relativ lange Verarbeitungszeiten vorhanden sind, so dass eine derartige Technik nicht für schnell laufende Zähler eingesetzt werden kann. Soll diese Technik auch für schnell laufende Zähler verwendet werden, ergibt sich auf der Verarbeitungsseite ein unverhältnismäßiger Aufwand.

Mit dem Gegenstand der DE 197 14 351 C2 wird lediglich die Drehzahl von Volumenzählern, insbesondere von Drehkolben-, Turbinenrad- und Wahlradzählern festgestellt, ohne dass die Auslesung von einzelnen Zahlenrollen vorgesehen ist. Bei dieser Technik wird ein Impulsdrahtsensor drehfest mit der Drehachse des jeweiligen Zählers angeflanscht, der im Wesentlichen aus einem umlaufenden Permanentmagneten besteht, der entsprechende Spannungsimpulse an einer im Abstand gegenüberliegend angeordneten Empfangsspule induziert.

Mit einer solchen Technik ist es deshalb nicht möglich, einzelne Zahlenrollen und die Ziffer auf den Zahlenrollen auszulesen.

Mit dem Gegentand der DE 295 10 643 U1 wird eine Fernkontrolle von Wasserverbräuchen von Zählern vorgeschlagen, bei der ein optoelektronischer Sender und ein optoelektronischer Empfänger verwendet werden. Hier besteht wiederum der Nachteil der Verschmutzungsgefahr durch eindringenden Schmutz und Feuchtigkeit.

Die DE 200 04 969 U1 verwendet ein elektronisches Bildlesegerät zur Auslesung der Zahlenrollen, während die DE 196 45 656 A1 eine elektronische Bilderfassung vorsieht.

Mit der DE 195 22 722 C2 wird eine mechanische Kontaktgabe mit einer umlaufenden Schaltnocke am am Umfang gleichmäßig verteilt angeordneten Schaltern vorgeschlagen, was mit hohem Aufwand, mit einer großen Reparaturanfälligkeit und mit einer Drehmoment beeinflussenden Auslesung verbunden ist.

Mit dem Gegenstand der DE 101 13 378 C2 wird eine berührungslose Abtastung von Rollen eines Rollenzählwerkes über eine kapazitive Auslesung vorgeschlagen. Eine codierte Beschichtung auf der Umfangsfläche der jeweiligen Rolle liegt gegenüberliegend zu einem Gegenbeschichtungsstreifen auf einer festen Gegenplatte, um so einen Kondensator mit je nach Winkelstellung der Rolle unterschiedlicher Kapazitäten zu bilden. Die hier anfallenden Kapazitäten werden messtechnisch ausgewertet.

Bei einer derartigen Vorrichtung besteht der Nachteil, dass eine externe Stromquelle verwendet werden muss, um den entstehenden Kondensator auslesen zu können. Weiterer Nachteil ist, dass die Auslesung gegen Feuchtigkeit und Schmutz außerordentlich empfindlich ist und im Übrigen ungenau, denn die Kapazitätserfassung erfolgt im Pico-Farad-Bereich, was zu relativ ungenauen Auswertergebnissen führt.

Die Kapazitäten sind im Übrigen von den mechanischen Dimensionen der Zahlenrollen und deren Abstand zu der Gegenplatte abhängig, was dazu führt, dass beispielsweise eine Winkelstellung der Zahlenrollenachse im Vergleich zu der ortsfesten Gegenplatte zu einer ungenauen und fehlerbehafteten Auslesung der Kondensatoren führt.

Der gleiche Nachteil ist im Übrigen auch bei der DE 100 27 647 B4 gegeben, weil dort ebenfalls eine kapazitive Auslesung gegeben ist.

Mit dem Gegenstand der EP 0 024 647 A1 ist eine induktive Auslesung eines Rollenzählwerkes bekannt geworden, dass allerdings unter dem Nachteil leidet, dass es gegen magnetische Einflüsse stark empfindlich ist. Bei derartigen Zählern kommt es oft vor, dass sie im Bereich von Starkstromleitungen verlegt sind und die magnetische Einkopplung von Feldern auf das hier beschriebene Rollenzählwerk führt zu einer fehlerhaften Auslesung der Zahlenrollen.

Weil das induktiv auslesbare Rollenzählwerk direkt mechanisch mit der Drehachse der einzelnen Zahlenrollen gekoppelt ist, ist damit auch die innere Drehreibung in nachteiliger Weise erhöht.

Die US 5,420,569 offenbart bereits eine Vorrichtung zur Abtastung der Teilstriche eines mechanischen Rollenzählwerks bei Zählern aller Art nach dem Oberbegriff des Patentanspruches 1. Die Transponder sind hier als magnetostriktive Elemente und das Antennenfeld als magnetisches Wechselfeld ausgebildet.

Der Erfindung liegt deshalb die Aufgabe zugrunde, eine Vorrichtung zur Abtastung der Teilstriche eines mechanischen Rollenzählwerks bei Zählern aller Art so weiterzubilden, dass die Auslesevorrichtung jederzeit unter geringem Aufwand nachträglich an einen vorhandenen Zähler angebaut werden kann und dass die Vorrichtung insgesamt magnetisch weniger empfindlich und auch gegen Schmutz und Feuchtigkeit resistent ist.

Zur Lösung der gestellten Aufgabe ist die Erfindung durch Anspruch 1 definiert.

Vorteilhafte Ausführungsbeispiele ergeben sich aus den abhängigen Ansprüchen.

Bevorzugtes Merkmal der Erfindung ist, dass in der jeweiligen Zahlenrolle des Zählwerkes jeder Ziffer mindestens ein (aktiver oder passiver) Transponder angeordnet ist, dem in geringem Abstand ein RFID-Antennenfeld gegenüberliegt, welches von einer entsprechenden Schaltung dergestalt angesteuert ist, dass jeweils mit einer Antenne des RFID-Antennenfeldes die Transponder einer Zahlenrolle des Zählwerkes auslesbar ist.

Mit der gegebenen technischen Lehre ergibt sich der wesentliche Vorteil, dass nun eine berührungslose Auslesung über kurze Sende- und Empfangsimpulse gegeben ist, wobei der Vorteil erreicht wird, dass diese Art der Auslesung magnetisch weniger empfindlich und im Übrigen auch unanfällig gegen Feuchtigkeit und Schmutz ist.

Es sind auch große geometrische Toleranzen zulässig, weil selbst ein mechanischer Versatz der Drehachse der Zahlenrolle im Vergleich zum gegenüberliegenden RFID-Antennenfeld nicht zu einer Beeinträchtigung der Auslesung führt.

Ein weiteres Merkmal der Erfindung ist, dass im Bereich der Auslesevorrichtung eine logische Überprüfung der ausgelesenen Werte und zusätzlich eine Plausibilitätsprüfung statt findet.

Dies bedeutet, dass Fehlereinflüsse weitgehend ausgeschlossen werden. Hier ist es bevorzugt vorgesehen, dass jeweils einer Antenne im ortsfesten RFID-Antennenfeld genau eine Zahlenrolle zugeordnet ist.

Es könnte nun passieren, dass auch die Transponder in der benachbarten Zahlenrolle durch einen Sendeimpuls der der anderen Zahlenrolle zugeordneten RFID-Antenne angesprochen werden.

Die dort in der benachbarten Zahlenrolle angeordneten Transponder senden jedoch mit einem anderen Identitätssignal oder charakteristischen Funksignal, welches von der Empfangsschaltung auf der Empfängerseite erkannt wird, so dass die Empfängerseite nur an der der einen Zahlenrolle zugeordnete Empfangsimpulse auswertet, die auch genau von der fluchtend gegenüberliegend angeordneten Zahlenrolle empfangen wurden.

Empfangssignale von der Transponderreihe auf der benachbarten Zahlenrolle werden erkannt und nicht zur Auswertung herangezogen.

Dies ist ein wesentlicher Vorteil gegenüber dem Stand der Technik, denn beim Stand der Technik war eine derartige logische Überprüfung der eingehenden Empfangsimpulse nicht gegeben und ebenso wenig eine Plausibilitätsprüfung.

Bei der Plausibilitätsprüfung werden alle möglichen Zahlenkombinationen in einem EEPROM abgelegt, und bei der Auswertung der einzelnen Empfangsimpulse aus dem RFID-Antennenfeld findet die besagte Plausibilitätsprüfung statt. Wurde eine Zahlenkombination erfasst, die nicht vorkommen kann oder als ungültig erkannt wurde, wird sie verworfen.

Mit der gegebenen technischen Lehre ist eine einfache Umrüstung vorhandener Zähler möglich, denn es reicht aus, lediglich die vorhandenen Zahlenrollen gegen die erfindungsgemäßen Zahlenrollen (mit eingesetzten Transpondern) auszutauschen.

Ferner reicht es bei einer Nachrüstung aus, die Ausleseeinheit auf das Sichtfenster des Zählers aufzusetzen und mit dem Gehäuse mechanisch zu verbinden, um das RFID-Antennenfeld in möglichst dichter und fluchtender Übereinstimmung mit den Zahlenrollen im Innenraum des Zählers zu positionieren.

Weiterer Vorteil der vorliegenden Erfindung ist, dass bereits im Herstellerwerk Zähler mit den erfindungsgemäßen Zahlenrollen ausgerüstet werden können, ohne die RFID-Ausleseeinheit selbst zu montieren.

Diese so vorgerüsteten Zähler können nach wie vor in herkömmlicher Weise verwendet werden, und erst wenn der Gesetzgeber vorschreibt, dass eine Fernauslesung gefordert wird, reicht es aus, die RFID-Ausleseeinheit außen an den Zähler anzubringen.

Selbstverständlich sieht die vorliegende Erfindung auch vor, dass solche Zähler sofort mit einer gehäuseseitig innenliegenden RFID-Auslesevorrichtung versehen werden können.

Wichtig bei allen Ausführungsformen ist, dass ein Abstand von bis zu 10 mm zwischen den Antennen des RFID-Antennenfeldes der Auslesevorrichtung und den zugeordneten Transpondern in den Zahlenrollen möglich ist. Dies ermöglicht eine große Gestaltungsfreiheit der Vorrichtung, und es ist sogar ein geringer seitlicher Versatz von z. B. 1 mm möglich, ohne dass es zu fehlerhaften Auslesungen kommt.

Selbst wenn die Drehachse des Zählwerkes verkantet zu dem RFID-Antennenfeld in der Auslesevorrichtung montiert wird, führt dies nicht zu fehlerhaften Ergebnissen.

Auch spielt ein Achsspiel des Zählwerkes, bedingt durch einen fortlaufenden Verschleiß, keine Rolle bei der Auslesung. Im Übrigen wird ein weitgehender Eingriff an den Zahlenrollen vermieden, weil herkömmliche Zahlenrollen verwendet werden können, die lediglich am Innen- oder Außenumfang oder an einem sonstigen Teil der Zahlenrolle mit einer Reihe von im Abstand voneinander angeordneten Transpondern versehen werden.

Es bedarf deshalb z. B. nicht der Anordnung von Leiterplatten zwischen den Zahlenrollen oder Lichtleitern, wie dies beim Stand der Technik der Fall ist.

Nachfolgend werden die Vorteile der vorliegenden Erfindung kurzgefasst nochmals wiedergegeben:

| | |
|---|---|
| Ausleseprinzip: | - induktiv, kontaktlos |
| bestehend aus: | - RFID-Transponder aktiv |
| | - Multiplexer |
| | - Microprozessor |
| | - Geeignete Schnittstelle zur Signalübertragung |
| | - Stabilisierung Betriebsspannung |
| | - RFID-Transponder passiv |
| | - Zahlenrolle(n) |

### Ausführung/Funktion:

- Die Zahlenrollenausleseeinheit (Blockschaltung) ist ohne Verbindung einer externen Schnittstelle stromlos.
- Ein internes Netzteil oder Batteriebetrieb ist möglich.
- Grundsätzlich erfolgt die Bestromung durch einen angeschlossenen Verbraucher beim optischen Betrieb oder bei einem Wirelessbetrieb erfolgt die Bestromung durch Batterie oder Netzteile

### Ausleseverfahren:

- Pro Zahlenrolle wird ein RFID-Lesegerät (aktiv) in einer Aufnahmeeinrichtung positioniert.
- In den Zahlenrollen befinden sich eingelegt und/oder eingespritzt oder anders befestigte RFID-Transponder (passiv) pro Ziffer.
- Jeder Ziffer wird ein unterschiedlich beschriebener Transponder zugeordnet.
- Als möglicher Ausleseport ist jeder bedrahtete, optische oder WirelessPort geeignet.

Die Antennenspulen sind bevorzugt als Leiterbahnen auf einer geäzten Leiterplatte angeordnet und sind gleichmäßig am Umfang verteilt angeordnet.

Jede Antennenspule ist getrennt ansteuerbar, so dass entsprechend der Anzahl der Antennenspulen auch eine Anzahl von Ansteuerleitungen auf der Sende- und Empfangsantennen-Baugruppe vorhanden ist.

Bei Drehung einer Zahlenrolle bewegt sich der Transponder zentrisch zu den am Umfang gleichmäßig verteilt angeordneten Antennenspule auf der Sende- und Empfangsantennen-Baugruppe. Die Antennenspule, die auf der Sende- und Empfangsantennen-Baugruppe dem sich vorbeibewegenden Transponder am nächsten liegt, bekommt ein entsprechendes Signal und dieses Signal wird in entsprechende Zahlenpositionen umgesetzt, weil ja die Sende- und Empfangsantennen-Baugruppe ortsfest angeordnet ist und demzufolge eine genaue Zuordnung jeder einzelnen Antennenspule den einzelnen, beweglich gegenüberliegenden Ziffern auf der Zahlenrolle zuordenbar ist.

Es wird bevorzugt so viele Antennenspulen auf der Sende- und Empfangsantennen-Baugruppe anzuordnen, wie Ziffern auf der Zahlenrolle zugeordnet werden sollen. Damit ist eine eindeutige Zuordnung möglich.

Vorteil dieses weiteren Ausführungsbeispiels ist, dass ein sehr geringer Raumbedarf besteht und ferner werden die kostenintensiven Transponder, die in einer Vielzahl auf der Zahlenrollen angeordnet werden mussten, deutlich verringert, weil nur noch ein einziger Transponder notwendig ist.

Ferner ist es möglich, die Sende- und Empfangsantennen-Baugruppe sehr schmal auszubilden, weil es sich um eine dünne Leiterplatte mit einer Dicke von z. B. kleiner als 1 Millimeter handelt, wobei diese Sende- und Empfangsantennen-Baugruppe im Zwischenraum ortsfest zwischen den sich aneinander vorbeibewegenden Zahlenrollen angeordnet ist.

In einer ersten bevorzugten Ausgestaltung ist es vorgesehen, dass die Sende - und Empfangantennen-Baugruppe sowohl an der Vorderseite als auch an der Rückseite getrennt voneinander ansteuerbare Antennenspulen aufweist, wobei beispielsweise die Vorderseite der Sende- und Empfangsantennen-Baugruppe der linken Zahlenrolle und die Rückseite dieser Baugruppe der rechten Zahlenrolle und dem dort angeordneten Transponder zugeordnet ist.

Es gibt jedoch auch die Möglichkeit, dass man lediglich mit einer einseitig bestückten Baugruppe und den dort beispielsweise an der Vorderseite angeordneten Antennenspulen sowohl die Stellungsabfrage der linken als auch der rechten Zahlenrolle vornehmen kann, weil die Antennenspulen durch das Material der Kunststoff-Leiterplatte hindurchstrahlen und demzufolge auch den Transponder auf der an der unbestückten Rückseite vorbeilaufenden Zahlenrolle entsprechend beschicken.

Durch die beidseitige Bestückung (vorder- und rückseitige Bestückung) der Sende- und Empfangsantennen-Baugruppe ergibt sich der Vorteil, dass auf kleinstem Raum eine Vielzahl von Antennenspulen angeordnet werden können. Dies ist jedoch nicht unbedingt lösungsnotwendig, denn wie vorhin ausgeführt, reicht es aus, lediglich die Vorderseite bzw. die Rückseite der Baugruppe mit Antennenspulen zu bestücken, wobei dergestalt codierte Signale ausgegeben werden, dass der Transponder auf der linken Zahlenrolle beispielsweise die Codierung A und der Transponder auf der rechten Zahlenrolle die Codierung B aufweist und die beiden Codierungen sich dergestalt unterscheiden, dass es einfach ist, bei der Auslesung der Antennenspulen festzustellen, ob nun die linke Zahlenrolle mit dem A-codierten Transponder oder die rechte Zahlenrolle mit dem B-codierten Transponder vorbeigelaufen und in der Stellung erfasst wurde.

In einer Weiterbildung der vorliegenden Erfindung ist erfindungsgemäß vorgesehen, dass entweder auf der ersten Zahlenrolle oder direkt auf der Antriebsachse des Turbinenrades eine fest angebrachte Metallplatte angeordnet ist, die mit der Zahlenrolle und demzufolge auch mit der Antriebsachse für die niederwertigste Zahlenrolle mitrotiert.

Dieser fest angebrachten Metallplatte, die drehfest mit der rotierenden Antriebsachse verbunden ist, ist ein ortsfest angeordneter Wirbelstromsensor zugeordnet, der die Rotationsgeschwindigkeit und die Drehrichtung dieser Metallplatte erfasst. Damit ist es nun erstmals möglich, den Vor- und Rücklauf des Mediums durch Erfassung der Drehrichtung der ersten, niederwertigsten Zahlenrolle bzw. durch Erfassung der Drehrichtung der Antriebsachse zu erfassen.

Das Signal des Wirbelstromsensors wird über eine Signalleitung an den Mikrokontroller gegeben, der ohnedies für die Signalverarbeitung der Signale von den Zahlenrollen zuständig ist und der Controller gibt sein Ausgangssignal auf ein Display, auf dem entsprechend der Softwareeinstellung der Vor- oder Rücklauf des Mediums angezeigt wird.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Auslesevorrichtung nach der RFID-Technik
- Figur 2:: vergrößert eine Zahlenrolle nach Figur 1
- Figur 3:: eine gegenüber Figur 1 leicht abgewandelte Darstellung mit Darstellung weiterer Einzelheiten
- Figur 4:: schematisiert das Funktionsprinzip der vorliegenden Erfindung
- Figur 5:: ein Zeit-Impulsdiagramm, welches die Abfrage der einzelnen Antennen darstellt
- Figur 6:: perspektivische Ansicht von zwei auseinandergezogenen Zahlenrollen mit einer dazwischen angeordneten Baugruppe
- Figur 7:: ein Zusammenbau der Anordnung nach Figur 6, wobei die Antennen beidseitig auf der Baugruppe angeordnet sind
- Figur 8:: ein abgewandeltes Ausführungsbeispiel, bei dem die Antennenspulen lediglich an einer Seite der Baugruppe angeordnet sind
- Figur 9:: die Vorderansicht der Baugruppe
- Figur 10:: die auseinandergeklappte Darstellung der Baugruppe nach Figur 9, um darzustellen, dass sowohl die Vorder- als auch die Rückseite mit Antennenspulen bestückt ist
- Figur 11:: eine gegenüber Figur 10 abgewandelte Ausführungsform, bei nur die ., Vorderseite der Baugruppe bestückt ist.
- Figur 12:: schematisiert dargestellte Anordnung zur Erfassung der Durchlaufrichtung des Mediums.

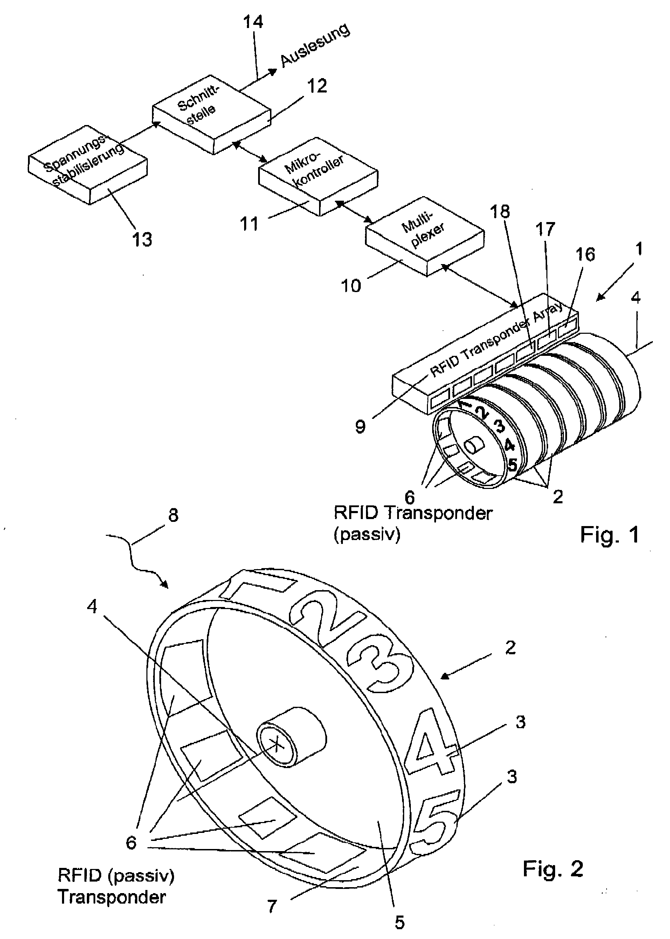

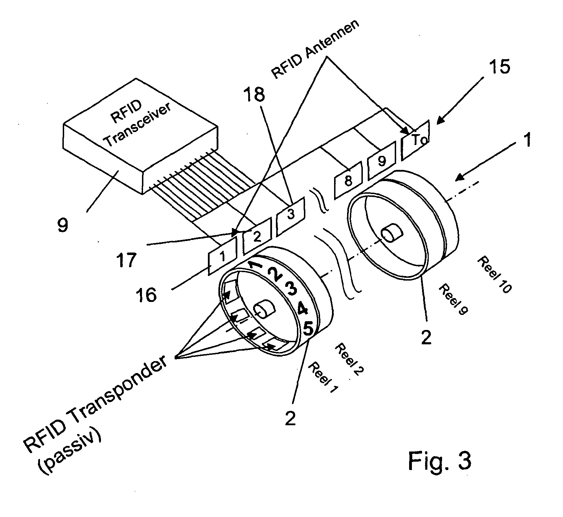

In den Figuren 1 und 3 ist als Hintergrundinformation, die nicht unter die Erfindung fällt, allgemein ein mechanisches Rollenzählwerk 1 dargestellt, welches aus einer Vielzahl von Zahlenrollen 2 besteht, die auf einer gemeinsamen Drehachse 4 drehend von einem nicht näher dargestellten Schrittschaltwerk angetrieben sind.

Gemäß Figur 3 weist jede Zahlenrolle 2 am Umfang verteilt angeordnete Ziffern 3 auf, die eine optische Auslesung des Zählwerkes 1 ermöglichen.

Jede Zahlenrolle 2 ist im Wesentlichen als zylindrischer Höhlkörper ausgebildet und bildet einen zur einen Seite offenen Innenraum 5 aus, so dass von dem Innenraum ausgehend eine innere Mantelfläche 7 vorhanden ist.

Eine Anzahl von Transpondern 6 sind im gegenseitigen Abstand gemäß Figur 2 auf der Innenseite der Mantelfläche 7 aufgebracht. Hierauf ist die Erfindung jedoch nicht beschränkt. Ein solcher Transponder 6 kann auch in das Kunststoffmaterial der Zahlenrolle eingegossen oder eingespritzt sein. In einer anderen Ausführung können die Transponder 6 auch auf dem Außenumfang der Zahlenrolle 2 anstelle oder zusammen mit den Ziffern 3 angebracht werden.

Wichtig ist nun, dass auf oder in jeder Zahlenrolle 2 eine Anzahl von im Abstand voneinander angeordneten Transpondern 6 befestigt sind, wobei jeweils ein Transponder einer Ziffer zugeordnet ist.

Statt der Ziffern 3 können selbstverständlich auch andere Merkmale für den Drehzustand der jeweiligen Zahlenrolle 2 verwendet werden, wie z. B. Symbole oder Buchstaben.

Den sich drehenden Zahlenrollen 2, die von dem nicht näher dargestellten Schrittschaltwerk angetrieben sind, liegt ortsfest ein Antennen feld gegenüber, welches Teil einer Transponder-Auslesevorrichtung 9 ist.

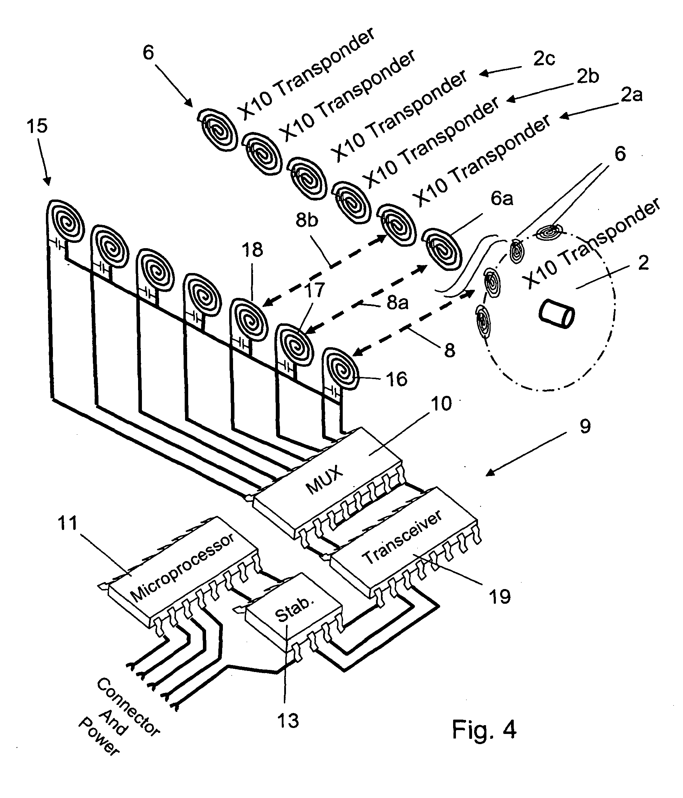

Diese Transponder-Auslesevorrichtung ist in Figur 4 näher dargestellt; sie besteht im Wesentlichen aus einem RFID-Antennenfeld 15, welches einzelne RFID-Antennen 16, 17, 18 aufweist.

Teil der Auslesevorrichtung ist ein Multiplexer 10, der von einem Mikrokontroller 11 angesteuert wird, der seinerseits mit einem Schnittstellen-Baustein 12 verbunden ist, der beispielsweise eine parallele oder serielle Auslesung vornimmt. Die erfassten Signale werden über eine Auslesung 14 weitergeleitet, wobei eine Spannungsstabilisierung 13 vorhanden ist.

Die Vorrichtung wird beispielsweise nur noch dann mit Strom versorgt, wenn eine Auslesung über die Ausleseleitung 14 stattfindet. In diesem Fall wird über die Ausleseleitung 14 die erforderliche Spannungsversorgung für die ortsfeste Auslesevorrichtung eingeleitet.

Eine gegenüber Figur 1 leicht abgewandelte Schaltung ist in Figur 3 dargestellt, wobei die gleichen Teile mit den gleichen Bezugszeichen versehen sind.

In Figur 4 sind nun weitere Einzelheiten der Ausleseschaltung zu erkennen.

Es ist erkennbar, dass der Transponder-Auslesevorrichtung 9 ein Multiplexer 10 nachgeschaltet ist, der die einzelnen RFID-Antennen 16-18 nacheinander folgend ansteuert, wobei jeweils immer nur eine RFID-Antenne 16, 17, 18 in Betrieb ist.

Auf diese Weise ist gewährleistet, dass jeweils immer nur eine Antenne 16 oder 17 oder 18 in Betrieb ist und dieser einen Antenne die jeweilige komplette Ausleseeinheit zur Verfügung steht und entsprechend ausgelesen wird.

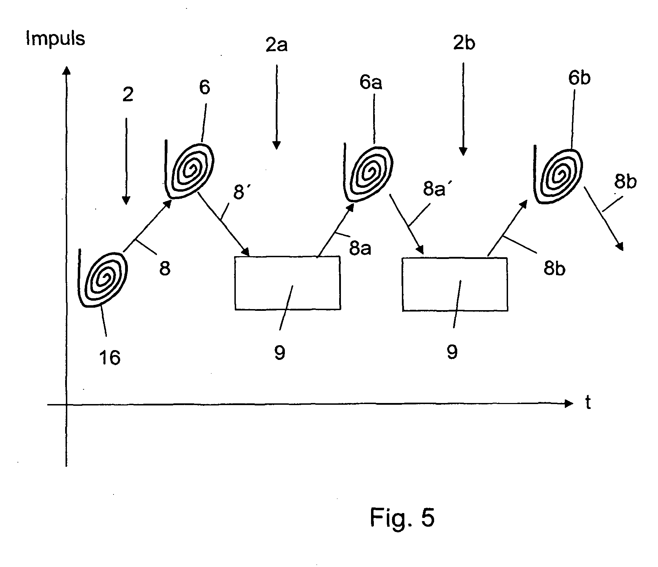

Ein typischer Auslesevorgang erfolgt beispielsweise dergestalt, dass der Multiplexer 10 zunächst die RFID-Antenne 16 einschaltet und über diese einen Sendeimpuls 8 gemäß Figur 5 abgibt. Dieser Sendeimpuls 8 wird gemäß Figur 5 von der Zahlenrolle 2 empfangen und trifft dort auf den fluchtend gegenüberliegenden aktuellen Transponder 6, der beispielsweise der Dezimalziffer 3 zugeordnet ist.

Dieser Transponder 6 antwortet mit seiner individuellen Kennung und sendet seinerseits einen Sendeimpuls 8' aus, der wiederum von der RFID-Antenne 16 erfasst und dem Mikroprozessor 11 zugeführt wird. Dies erfolgt unter Steuerung des Transceivers 19.

Es wird nun das Empfangssignal des Transponders 6 in der Zahlenrolle 2 ausgewertet und erkannt, dass es der Transponder 6 ist, der der Ziffer 3 in der Zahlenrolle 2 zugeordnet ist.

Über eine Plausibilitätsprüfung wird nun geprüft, ob es logisch ist, dass die Zahlenrolle 2 geantwortet hat und nicht eine benachbarte Zahlenrolle.

Ferner wird im Mikroprozessor ein dort angeordneter EEPROM abgefragt und festgestellt, ob die empfangene Zahl überhaupt logisch möglich und zulässig ist.

Sobald diese Plausibilitäts- und logische Überprüfung stattgefunden hat, wird die Zahl abgespeichert.

Die logische Überprüfung und die Plausibilitätsprüfung werden jedoch erst dann durchgeführt, wenn alle Zahlenrollen abgefragt wurden und die entsprechenden Ergebnisse vorliegen.

Gemäß Figur 5 wird nun die nächste, benachbarte Zahlenrolle 2a abgefragt und es wird in der gleichen Weise ein Sendeimpuls 8a von der benachbarten Antenne 17 ausgesendet und von einem bestimmten Transponder 6a in der benachbarten Zahlenrolle 2a empfangen, der dadurch aktiviert wird und seine individuelle Kennung mit dem Sendestrahl 8a' zurück auf die Antenne 17 sendet. Auch hier erfolgt wieder eine entsprechende Auswertung und eine Abspeicherung dieses Wertes, wonach dann nachfolgend die nächste RFID-Antenne 18 in Betrieb genommen wird und einen Sendeimpuls 8b aussendet, der von der in der Zahlenrolle 2b angeordneten Transponder 6b empfangen und mit seiner individuellen Kennung zurück als Sendestrahl 8b' gesendet wird.

Auf diese Weise erfolgt schrittweise das Abfragen aller Transponder in den jeweiligen Zahlenrollen, wobei jeweils nur der Transponder antwortet, der genau fluchtend in der Funkstrecke zwischen dem der dieser Zahlenrolle zugeordneten RFID-Antenne (16-18) liegt.

Ein anderer Transponder, der weiter von dem RFID-Antennenfeld entfernt auf der gleichen Zahlenrolle (z. B. der Zahlenrolle 2) angeordnet ist und dem eine andere dezimalen Ziffer auf der Zahlenrolle zugeordnet ist, wird nicht antworten, weil die Sendeenergie so gering ist, dass sie nur ausreicht, den jeweils vorderste und nächst dem RFID-Antennenfeld 15 angeordneten Transponder zur Aussendung seiner Kennung zu veranlassen.

In einer Weiterbildung der vorliegenden Erfindung kann es vorgesehen sein, dass jeder einzelnen RFID-Antenne 16, 17, 18 usw. eine eigene Sende- und Empfangsfrequenz zugeordnet ist, so dass auch hierdurch eine Unterscheidung zwischen den einzelnen Zahlenrollen gegeben ist. Auf diese Weise erfolgt eine starre Zuordnung jeweils einer Zahlenrolle zu einer bestimmten RFID-Antenne. Ein Übersprechen zwischen dem Funkverkehr einer RFID-Antenne und der benachbarten Zahlenrolle ist deshalb ausgeschlossen.

Weiterer Vorteil der Erfindung ist, dass nur aktuell dann der gesamte Zählerstand ausgelesen wird, wenn Spannung an die Ausleseeinheit 14 angelegt wird, was auch von einer sehr entfernten Spannungsquelle über eine lange Leitung erfolgen kann. Es werden dann aktuell die Zählerstände nach dem oben genannten Verfahren ausgelesen, ohne dass es einer Zwischenspeicherung der Daten bedarf. Es erfolgt damit ein sehr geringer elektronischer Schaltungsaufwand mit höchster Sicherheit bei der Auslesung.

Es ist selbstverständlich auch möglich, eine solche Versorgungsspannung kurzzeitig über einen Sendeimpuls auf die Ausleseleitung 14 zu koppeln, um nur für diesen Fall die gesamte Vorrichtung auszulesen.

Selbstverständlich ist es auch möglich, die gesamte Schaltung mit einer Batterie zu betreiben.

Im Übrigen handelt es sich bei der vorliegenden Erfindung um einen Absolut-Encoder, weil die Auslesung absolut erfolgt, d. h. jeder Ziffer ist genau ein Wert zugeordnet.

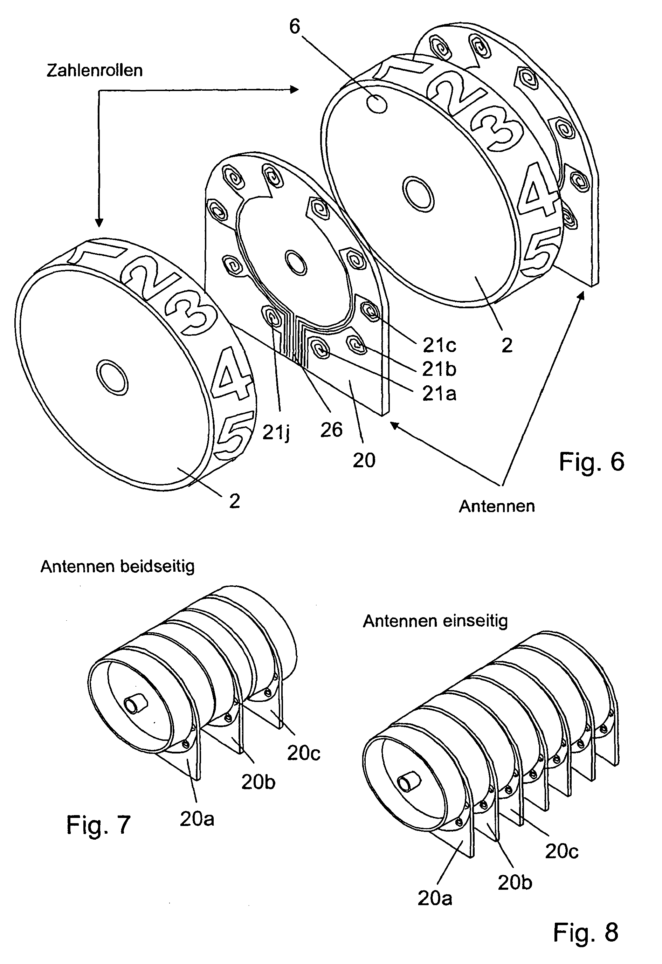

In der Ausführung nach Figur 6 ist als Hintergrundinformation, die nicht unter die Erfindung fällt, dargestellt, dass jede Zahlenrolle 2 lediglich einen einzigen Transponder 6 trägt, und der Transponder sich bei Bewegen (Drehung) der Zahlenrolle an der ortsfesten Sende- und Empfangsantennen-Baugruppe 20 vorbeibewegt.

Diese Baugruppe besteht bevorzugt aus einer Leiterplatte 22, die mit einer Vielzahl von Leiterbahnen 23 bestückt ist.

Im gezeigten Beispiel nach Figur 6 sind auf der Leiterplatte 22 eine Anzahl von Antennenspulen (21a-21j) angeordnet, wobei bevorzugt jede Antennenspule jeder Ziffer auf der Zahlenrolle zugeordnet ist.

Der Begriff einer "Ziffer" auf der Zahlenrolle ist nur beispielhaft zu verstehen. Es kann sich auch um beliebige Symbole handeln, wobei nur vorausgesetzt wird, dass die Anzahl der von der Zahlenrolle auszulesenden Symbole mit der Anzahl der Antennenspulen 21 a-21j übereinstimmt.

Jede Antennenspule ist getrennt auslesbar, so dass eine Vielzahl von Anschlussleitungen 26 von der Leiterplatte 22 wegführt und dort mit einer entsprechenden Ausleseeinheit verbunden ist.

Die Figur 7 zeigt, dass die Antennenspulen 21 beidseitig auf der Leiterplatte 22 angeordnet sind, so dass also die Vorderseite 24 mit den dort angeordneten Antennenspulen 21 beispielsweise der linken Zahlenrolle 2 und die Rückseite 25 der Leiterplatte 22 mit den dort angeordneten weiteren Antennenspulen 21 der rechten Zahlenrolle zugeordnet ist.

Die Figur 8 zeigt als Unterschiedsmerkmal, dass es auch ausreicht, die Antennenspulen 21 lediglich beispielsweise nur auf der Vorderseite 24 anzuordnen.

Entsprechend dem allgemeinen Beschreibungsteil senden dann die auf der Vorderseite angeordneten Antennenspulen 21 durch das elektrisch isolierende Material der Leiterplatte 22 hindurch zu der gegenüberliegend auf der Rückseite angeordneten Zahlenrolle und dem dort angeordneten Transponder.

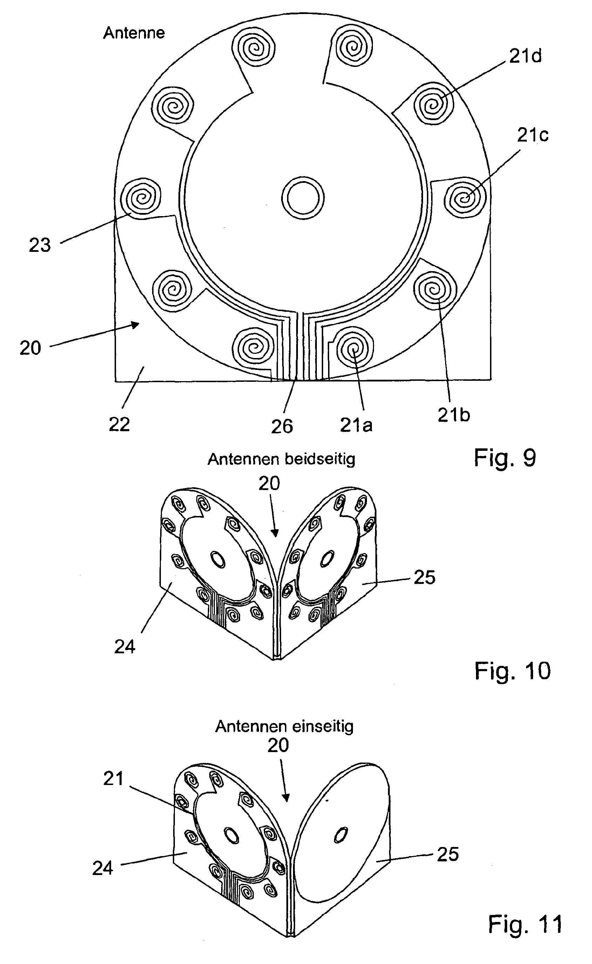

Die Figur 9 zeigt die Draufsicht auf eine solche Leiterplatte 22 mit der Anordnung der Antennenspulen 21a-21j.

Die Figur 10 zeigt die Leiterplatte im aufgeklappten Zustand, was jedoch nur der zeichnerischen Verdeutlichung dient. In Wirklichkeit gibt es keinen Klappzustand, sondern es wird nur dargestellt, dass die Vorderseite 24 und die Rückseite 25 mit unterschiedlichen Antennenspulen 21 bestückt ist.

In der Abweichung von diesem Ausführungsbeispiel nach Figur 10 zeigt die Figur 11, dass es ausreicht, nur die Vorderseite 24 mit den Antennenspulen 21 zu bestücken.

Mit der Verwirklichung der Erfindung ist es erstmals möglich, folgende Zusatzfunktionen eines Zählwerkes zu realisieren:
absoluter Zählwert
absoluter Zählwert zum Stichtag
Zählwert pro Zeiteinheit
Vor-/ Rücklauf des Mediums
Leckage
Anzeigewechsel zwischen aktuellem und Gesamtverbrauch
Zählernummer wird bei Auslesung mit übertragen
Alarmfunktion bei Überschreitung von Grenzwerten
Batteriestandsanzeige
Interpreter für verschiedene Schnittstellen geeignet, z.B. M-BUS, LAN, Berücksichtung Gallone, Liter und andere.

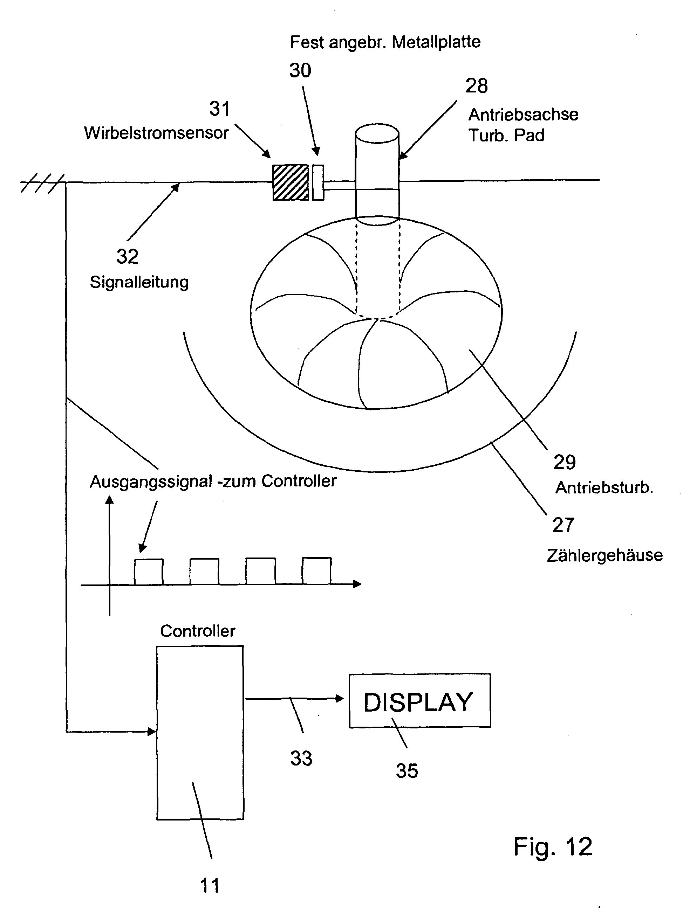

Aus der obenstehenden Liste der Zusatzfunktionen ergibt sich, dass es mit der Ausführung nach Figur 12 erstmals möglich ist, auch die Flussrichtung des Mediums festzustellen.

Im gezeigten Ausführungsbeispiel nach Figur 12 ist angegeben, dass eine fest angebrachte Metallplatte 30 drehfest mit der Antriebsachse 28 des Zählwerkes verbunden ist. Die Antriebsachse 28 ist fest mit der Antriebsturbine 29 verbunden, welche in dem Mediumsstrom hineinreicht und von diesem drehend angetrieben wird.

Das Ausführungsbeispiel nach Figur 12 stellt nicht dar, dass diese fest angebrachte Metallplatte auch auf der niederwertigsten Zahlenrolle 2 angeordnet sein kann, weil diese sich ebenfalls entsprechend der Durchflussrichtung des Mediums vorwärts und rückwärts drehen kann.

Der Metallplatte 30 gegenüberliegend ist ein Wirbelstromsensor 31 angeordnet, der die Drehrichtung und die Drehgeschwindigkeit der Metallplatte 30 erfasst. Die Signale des Wirbelstromsensors 31 werden über eine Signalleitung 32 dem Mikrokontroller 11 zugeführt, an dessen Ausgang über eine Leitung 33 ein Display 35 angesteuert wird, auf dem die Drehrichtung des Mediums anzeigbar ist.

Selbstverständlich werden auf dem Display 35 auch die anderen Zusatzfunktionen, die in der oben genannten Aufzählung enthalten sind, angezeigt.

### Zeichnungslegende

- 1: Zählwerk
- 2: Zahlenrolle
- 3: Ziffer
- 4: Drehachse
- 5: Innenraum
- 6: Transponder
- 7: Mantelfläche
- 8: Sende-Empfangsimpuls 8a, 8b
- 9: Transponder-Auslesevorrichtung
- 10: Multiplexer
- 11: Mikrokontroller
- 12: Schnittstellen-Baustein
- 13: Spannungsstabilisierung
- 14: Ausleseleitung
- 15: RFID-Antennenfeld
- 16: RFID-Antenne
- 17: RFID-Antenne
- 18: RFID-Antenne
- 19: Transceiver

## Patentansprüche

1. a) Vorrichtung zur Abtastung der Teilstriche eines mechanischen Rollenzählwerkes (1) bei Zählern aller Art,
b) mit einer Anzahl von drehend angetriebenen Zahlenrollen (2),
c) wobei jede Zahlenrolle (2) eine Anzahl von Symbolen (3) gleichmäßig am Umfang verteilt trägt,
d) und mit einer Auslesevorrichtung (9), die ortsfest den Zahlenrollen (2) gegenüberliegt, und zur Erfassung und Auswertung der Symbole (3) eingerichtet ist,
e) wobei in der jeweiligen Zahlenrolle (2) des Zählwerkes (1) jedem dort angeordneten Symbol (3) je ein digital codiertes Element (6) zugeordnet ist, dem in geringem Abstand ein Antennenfeld (15) gegenüberliegt, wobei das Antennenfeld (15) mit der Auslesevorrichtung (9) verbunden ist,
f) wobei das Antennenfeld von einer Schaltung (10-14) dergestalt angesteuert ist, dass mit dem Antennenfeld (15) die digital codierten Elemente einer Zahlenrolle (2) des Zählwerkes (1) auslesbar ist,
g) **dadurch gekennzeichnet, dass**
h) jedes codierte Element als Transponder (6) mit einem eine digitale Kennung aufweisenden Code ausgebildet ist,
i) dass die Auslesevorrichtung (9) als Lesegerät zum Auslesen dieser Kennung ausgebildet ist,
j) dass jedem Transponder je eine Antenne (16-18) des Antennenfeldes (15) zugeordnet ist,
k) dass die Transponder (6) einer Zahlenrolle (2) ein Identitätssignal senden, das sich vom Identitätssignal der Transponder einer benachbarten Zahlenrolle (2) unterscheidet,
l) wobei die Identitätssignale von einer Empfangsschaltung auf einer Empfängerseite erkannt werden, so dass die Empfängerseite nur die einer Zahlenrolle zugeordneten Identitätssignale auswertet,
m) dass die Identitätssignale von der Transponderreihe auf einer benachbarten Zahlenrolle erkannt und nicht zur Auswertung herangezogen werden
n) und dass die Sendeenergie so gering ist, dass sie nur ausreicht, den jeweils vordersten und am nächsten beim Antennenfeld (15) angeordneten Transponder (6) zur Aussendung seiner Kennung zu veranlassen.

2. Vorrichtung nach Anspruch 1, **dadurch gekennzeichnet, dass** der Transponder (6) passiv oder aktiv arbeitet.

3. Vorrichtung nach Anspruch 1 oder 2, **dadurch gekennzeichnet, dass** im Bereich der Ausleseeinheit eine logische Überprüfung der ausgelesenen Werte und zusätzlich eine Plausibilitätsprüfung stattfinden.

4. Vorrichtung nach einem der Ansprüche 1 bis 3, **dadurch gekennzeichnet, dass** zur Durchführung einer Plausibilitätsprüfung alle möglichen und gültigen Zahlenkombinationen in einem EEPROM abgelegt sind, und bei der Auswertung der einzelnen Empfangsimpulse (8, 8a, 8b) auslesbar und auf Gültigkeit überprüfbar sind.

5. Vorrichtung nach einem der Ansprüche 1 bis 4, **dadurch gekennzeichnet, dass** der Transponder-Auslesevorrichtung (9) ein Multiplexer (10) nachgeschaltet ist.

6. Vorrichtung nach einem der Ansprüche 1 bis 5, **dadurch gekennzeichnet, dass** die Transponder (6) in den jeweiligen Zahlenrollen (2) schrittweise abfragbar sind, wobei jeweils nur der Transponder (6) antwortet, der genau fluchtend in der Funkstrecke liegt, die zwischen dem dieser Zahlenrolle (2) zugeordneten Transponder (6) und der dieser Zahlenrolle (2) zugeordneten Antenne (16-18) liegt.

7. Vorrichtung nach einem der Ansprüche 1 bis 6, **dadurch gekennzeichnet, dass** jeder einzelnen Antenne (16-18) eine eigene Sende- und Empfangsfrequenz zugeordnet ist.

8. Vorrichtung nach einem der Ansprüche 1 bis 7, **dadurch gekennzeichnet, dass** für eine fehlerfreie Auslesung ein Abstand von bis zu 10 mm zwischen den Antennen des Antennenfeldes der Auslesevorrichtung und den zugeordneten Transpondern in den Zahlenrollen möglich ist.

9. Vorrichtung nach einem der Ansprüche 1 bis 8, **dadurch gekennzeichnet, dass** für eine fehlerfreie Auslesung ein geringer seitlicher Versatz von z. B. 1 mm möglich ist.

## Claims

1. a) Device for scanning the division marks of a mechanical roller-type counter (1) in any type of counter,
b) with a number of rotatably driven ciphering rollers (2),
c) wherein each ciphering roller (2) carries a number of symbols (3) uniformly distributed on the periphery,
d) and with a readout device (9), which stationarily opposes the ciphering rollers (2), and is set up to detect and evaluate the symbols (3),
e) wherein in the respective ciphering roller (2) of the counter (1), a digitally coded element (6) is assigned in each case to each symbol (3) arranged there, an antenna field (15) opposing said digitally coded element at a slight spacing, the antenna field (15) being connected to the readout device (9),
f) wherein the antenna field is activated by a circuit (10 to 14) in such a way that the digitally coded elements of a ciphering roller (2) of the counter (1) can be read by the antenna field (15),
g) **characterised in that**
h) each coded element is configured as a transponder (6) with a code having a digital identifier,
i) **in that** the readout device (9) is configured as a reading apparatus for reading out this identifier,
j) **in that** an antenna (16 to 18) of the antenna field (15) is in each case assigned to each transponder,
k) **in that** the transponders (6) of a ciphering roller (2) transmit an identity signal, which differs from the identity signal of the transponders of an adjacent ciphering roller (2),
l) wherein the identity signals are recognised by a receiving circuit on a receiver side, so the receiver side only evaluates the identity signals assigned to one ciphering roller,
m) **in that** the identity signals of the transponder series on an adjacent ciphering roller are recognised and not used for evaluation
n) and **in that** the transmitting energy is so low that it is only sufficient to cause the respective foremost transponder (6) arranged closest in the antenna field (15) to emit its identifier.

2. Device according to claim 1, **characterised in that** the transponder (6) works passively or actively.

3. Device according to claim 1 or 2, **characterised in that** a logical check of the read values and additionally a plausibility test take place in the region of the readout unit.

4. Device according to any one of claims 1 to 3, **characterised in that** all possible and valid number combinations are stored in an EEPROM to carry out a plausibility check, and can be read out during the evaluation of the individual reception pulses (8, 8a, 8b) and can be checked for validity.

5. Device according to any one of claims 1 to 4, **characterised in that** a multiplexer (10) is connected downstream of the transponder readout device (9).

6. Device according to any one of claims 1 to 5, **characterised in that** the transponders (6) in the respective ciphering rollers (2) can be queried step-wise, wherein only that transponder (6) responds in each case, which lies precisely flush in the radio path, which is located between the transponder (6) assigned to this ciphering roller (2) and the antenna (16 to 18) assigned to this ciphering roller (2).

7. Device according to any one of claims 1 to 6, **characterised in that** each individual antenna (16 to 18) is assigned its own transmitting and receiving frequency.

8. Device according to any one of claims 1 to 7, **characterised in that** for a fault-free readout, a spacing of up to 10 mm is possible between the antennas of the antenna field of the readout device and the associated transponders in the ciphering rollers.

9. Device according to any one of claims 1 to 8, **characterised in that** for a fault-free readout, a small lateral offset of, for example, 1 mm is possible.

## Revendications

1. a) Dispositif de lecture des repères de graduation d'un mécanisme de compteur mécanique à rouleaux (1) sur des compteurs de tous types,
b) avec un certains nombre de rouleaux chiffres (2) entraînés en rotation,
c) étant précisé que chaque rouleau chiffre (2) porte un certain nombre de symboles (3) répartis uniformément sur sa circonférence,
d) et avec un dispositif de lecture (9) qui est disposé fixe en face des rouleaux chiffres (2) et qui est conçu pour détecter et analyser les symboles (3),
e) étant précisé que dans chaque rouleau (2) du mécanisme de compteur (1) est prévu, associé à chaque symbole (3) disposé à cet endroit, un élément à codage numérique (6) en face duquel se trouve, à une faible distance, un champ d'antennes (15), étant précisé que le champ d'antennes (15) est relié au dispositif de lecture (9),
f) étant précisé que le champ d'antennes est commandé par un circuit (10-14) de telle sorte que les éléments à codage numérique d'un rouleau (2) du mécanisme de compteur (1) peuvent être lus avec le champ d'antennes (15),
g) **caractérisé**
h) **en ce que** chaque élément codé est conçu comme un transpondeur (6) avec un code qui présente une identification numérique,
i) **en ce que** le dispositif de lecture (9) est conçu comme un lecteur pour lire cette identification,
j) **en ce qu'**une antenne (16-18) du champ d'antennes (15) est associée à chaque transpondeur,
k) **en ce que** les transpondeurs (6) d'un rouleau chiffre (2) émettent un signal d'identité qui est différent d'un signal d'identité des transpondeurs d'un rouleau chiffre (2) voisin,
l) étant précisé que les signaux d'identité sont reconnus par un circuit de réception, sur un côté récepteur, de sorte que le côté récepteur n'analyse que les signaux d'identité associés à un rouleau chiffre,
m) **en ce que** les signaux d'identité sont reconnus par la rangée de transpondeurs sur un rouleau chiffre voisin, et ne sont pas utilisés pour l'analyse,
n) et **en ce que** l'énergie d'émission est tellement faible qu'elle suffit seulement pour amener le transpondeur (6) de devant et le plus proche du champ d'antennes (15) à émettre son identification.

2. Dispositif selon la revendication 1, **caractérisé en ce que** le transpondeur (6) fonctionne de manière passive ou active.

3. Dispositif selon la revendication 1 ou 2, **caractérisé en ce que** dans la zone de l'unité de lecture a lieu un contrôle logique des valeurs lues, et en supplément un contrôle de vraisemblance.

4. Dispositif selon l'une des revendications 1 à 3, **caractérisé en ce que** pour la réalisation d'un contrôle de vraisemblance, toutes les combinaisons de chiffres possibles et valables sont stockées dans une mémoire EEPROM et sont aptes à être lues et à être soumises à un contrôle de validité lors de l'analyse des impulsions de réception individuelles (8, 8a, 8b).

5. Dispositif selon l'une des revendications 1 à 4, **caractérisé en ce qu'**un multiplexeur (10) est monté en aval du dispositif de lecture à transpondeurs (9).

6. Dispositif selon l'une des revendications 1 à 5, **caractérisé en ce que** les transpondeurs (6) sont aptes à être interrogés pas à pas dans les rouleaux chiffres (2) respectifs, étant précisé que seul le transpondeur qui se trouve dans l'alignement exact, sur le trajet radioélectrique situé entre le transpondeur (6) associé au rouleau (2) et l'antenne (16-18) associée à ce rouleau (2) répond.

7. Dispositif selon l'une des revendications 1 à 6, **caractérisé en ce qu'**une fréquence d'émission et de réception propre est associée à chaque antenne individuelle (16-18).

8. Dispositif selon l'une des revendications 1 à 7, **caractérisé en ce que** pour une lecture sans erreur, une distance allant jusqu'à 10 mm entre les antennes du champ d'antennes du dispositif de lecture et les transpondeurs associés dans les rouleaux chiffres est possible.

9. Dispositif selon l'une des revendications 1 à 8, **caractérisé en ce que** pour une lecture sans erreur, un faible déport latéral de 1 mm, par exemple, est possible.
